# EUROPEAN PATENT APPLICATION

(11) **EP 1 722 180 A1**
(43) Date of publication of application: **15.11.2006**
(21) Application number: 05710750.0
(22) Date of filing: 14.02.2005
(51) Int. Cl.: F27D 17/00, F27B 9/30

(54) **ATTACHING DEVICE FOR COOLING AND CLEANING PROCESS OF EXHAUST GAS GENERATED FROM REFLOW FURNACE**

(30) Priority: 05.03.2004 JP 2004061725; 15.11.2004 JP 2004330929
(71) Applicant: Yamakawa Sangyo Co., Ltd., Sawara-ku Fukuoka-City, Fukuoka 8111132 (JP)
(72) Inventor: SUEYASU, Masakazu, 8111132 (JP)
(74) Representative: Haley, Stephen
(86) International application number: PCT/JP2005/003219
(87) International publication number: WO 2005/085734

(57) **Abstract**

This invention provides an apparatus for cooling and cleaning emission gas which does not affect working environment even indoor in processing of emission gas including hot gas (hot wind) and volatile gas generated by heating of flux and can operate stably in a long period without replenishment of cooling water when this apparatus for cooling/cleaning the emission gas is installed in a reflow furnace.

## Description

The present invention relates to an apparatus for cooling and cleaning emission gas from a reflow furnace for use in soldering electronic components.

The reflow furnace is used to solder an electronic component mounted on a board coated with solder paste to the printed board by heating the printed board in that furnace.

The solder paste is produced by mixing and agitating flux and powder solder, having a viscosity suitable for print or discharge and this solder paste is printed to the soldering portion of the printed board or applied by discharging to the soldering portion with the plunger of an injection device pressed with compression air.

As a technology about such a reflow furnace, the art disclosed in Japanese Patent Application Laid-Open No.8-8529 has been known.

Patent document: Japanese Patent Application Laid-Open No.8-8529

Although hot gas (hot wind) generated from a heater is used by circulation in the reflow furnace, leakage of hot gas (hot wind) and volatile gas generated by heating of flux from flux generated when cream solder applied on the board is heated and radiation of heat from the cover face and the like of the furnace main body are unavoidable because the intake and outlet of a conveyor communicate with outside. Thus, working environment is worsened by hot air indoor.

Although heat, hot gas (hot wind) and emission gas of the volatile gas due to heating of flux are introduced and discharged to outside through a duct, construction work for the exhaust air duct takes labor and cost, which is a problem to be solved.

The present invention has been achieved to solve the conventional problem and an object of the invention is to provide an apparatus for cooling and cleaning emission gas which is capable of discharging air without affecting working environment even indoor and operating stably in a long period without replenishment of cooling water when this apparatus for cooling/cleaning the emission gas is installed in a reflow furnace.

As a means for achieving the above object, according to a first aspect of the invention, there is provided an apparatus for cooling and cleaning emission gas comprising: an exhaust air duct for discharging hot gas (hot wind) and volatile gas generated by heating of flux; storage baths for storing cooling liquid; and a blower for injecting emission gas including hot gas (hot wind) and volatile gas generated by heating of flux sent from the exhaust air duct against the surface of the cooling liquid with a pressure.

According to a second aspect of the invention, there is provided an apparatus for cooling and cleaning emission gas comprising: an exhaust air duct for hot gas (hot wind) and volatile gas generated by heating of flux disposed at an intake and an outlet of a heating portion of a reflow furnace; storage baths for storing cooling liquid; and a blower for injecting emission gas including hot gas (hot wind) and volatile gas generated by heating of flux sent from the exhaust air duct against the surface of the cooling liquid with pressure.

According to a third aspect of the invention, there is provided the apparatus for cooling and cleaning emission gas according to the first aspect or the second aspect of the invention, wherein an injection port for hot gas (hot wind) and volatile gas generated by heating of flux sent from the exhaust air duct is disposed in the vicinity of the surface of cooling liquid; the injection port is disposed in a condition of being floated on the liquid surface with floats; and the injection port on the floats is lifted up/down corresponding to changes of the level of the cooling liquid so that the distance between the liquid surface and the injection port is kept constant.

According to a fourth aspect of the invention, there is provided the apparatus for cooling and cleaning emission gas according to any one of the first aspect to the third aspect of the invention, wherein the emission gas from the injection port is injected to collide with a scattering plate so that it is scattered.

According to a fifth aspect of the invention, there is provided the apparatus for cooling and cleaning emission gas according to any one of the first aspect to the fourth aspect of the invention, wherein emission gas including hot gas (hot wind) and volatile gas generated by heating of flux sent from the injection port is made to collide with the liquid surface so as to generate spray of water so that fog-like water droplets make contact with the hot gas to secure cooling efficiency.

### BRIEF DESCRIPTION OF THE DRAWINGS

FIG. 1 is a schematic view of an emission gas cooling, cleaning apparatus,
FIG. 2 is a schematic view of reflow furnace integrated type emission gas cooling, cleaning apparatus,
FIG. 3 is a diagram of a storage bath and an injection portion,
FIG. 4 is a plan view of the storage bath and the injection portion,
FIG. 5 is a disassembly perspective view of the injection portion,
FIG. 6 is a schematic view showing the loading condition of the storage baths, and
FIG. 7 is a schematic view of a reflow furnace.

The present invention will be described in more detail with reference to the accompanying drawings.

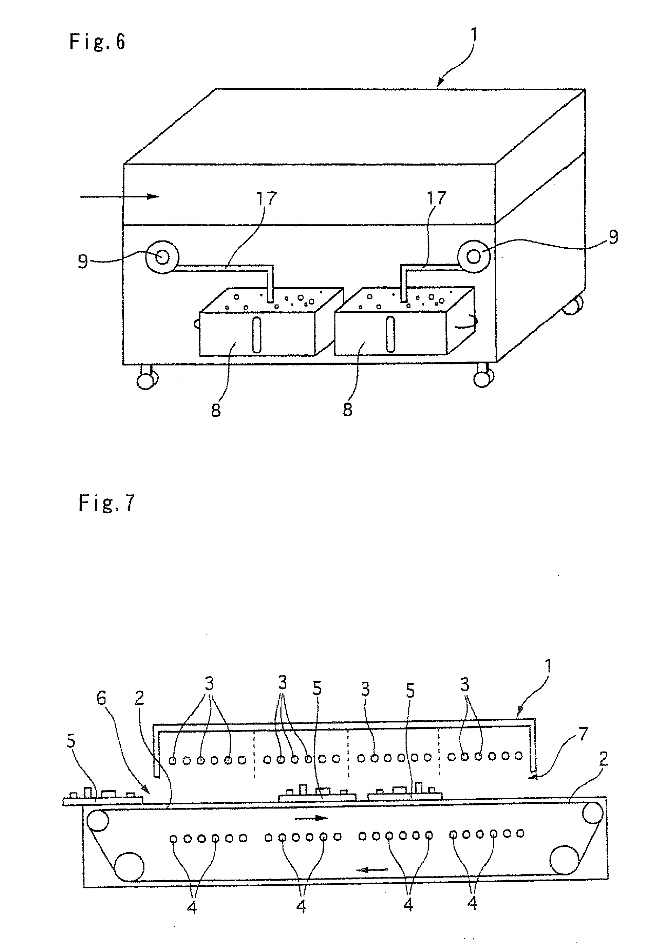

FIG. 7 is a side view showing schematically the structure of a conventionally well known reflow furnace. Referring to the same Figure, a reflow furnace 1 includes a chain conveyor 2 for carrying an electronic component mounted board 5 within the reflow furnace 1 main body and has upper heaters 3 arranged in order along this chain conveyor 2 and lower heaters 4 arranged to oppose across the chain conveyor 2. The electronic component mounted board 5 carried within the reflow furnace main body by the chain conveyor 2 is heated by the upper heater and the lower heater 4...4 successively so as to melt solder on a reflow surface thereby soldering the electronic component to a board.

The board carrying conveyor 2 is so constructed to carry the boards from the left to the right at a specified dimensional unit by control system.

In this reflow furnace 1, its furnace is set to several stages, for example, preheating process and heating process.

Hot gas (hot wind) generated from the heater 3 is blown from top to bottom by a circulating device (not shown) so that it is circulated within the furnace so as to heat the printed boards.

Because an electronic component is mounted on the printed board and solder paste is applied between this electronic component and board, the solder past is melted to solder the electronic component to the board when the board passes a heating portion in the reflow furnace by a constant speed feeding mechanism.

Although in the furnace, hot gas (hot wind) in the furnace is used by circulation, a slight amount of hot gas (hot wind) and volatile gas generated by heating of flux leaks out through an intake 6 and an outlet 7 for the printed board because the intake and outlet communicate with outside. Although these gases are discharged through a duct conventionally, it takes labor to install the exhaust air duct.

Accordingly, the present invention provides an apparatus for cooling and cleaning hot gas (hot wind) and volatile gas generated by heating of flux.

### First embodiment

The emission gas cooling, cleaning apparatus of the first embodiment will be described.

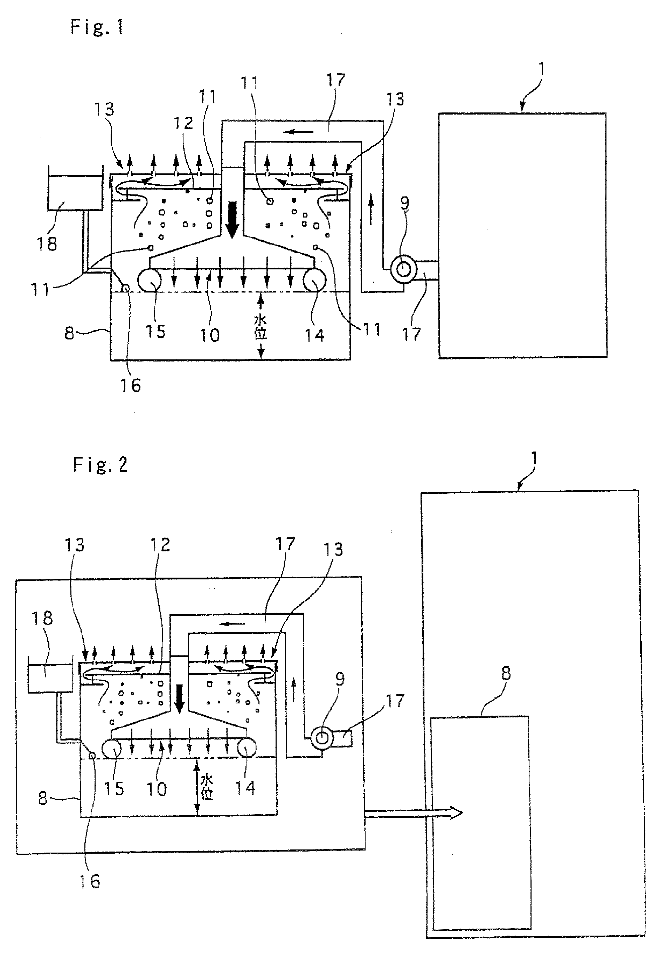

The emission gas cooling, cleaning apparatus of the first embodiment represents the schematic structure of the invention and as shown in FIG. 1, an exhaust air duct 17 is extended from the main body of the reflow furnace 1 to a storage bath 8 of cooling water. FIG. 2 shows a structure in which the storage bath 8 of cooling liquid is incorporated integrally in the main body of the reflow furnace 1.

After hot gas (hot wind) generated from the heating furnace and volatile gas generated by heating of flux are collected by the exhaust air duct 17 accompanied by the operation of the reflow furnace 1, they are injected from an injection port 10 by a blower 9 with a pressure.

On the other hand, cooling liquid is stored in the storage bath 8 and hot gas (hot wind) and volatile gas generated by heating of flux are blown against the surface of cooling liquid from the injection port 10.

At this time, cooling water is blown up by the pressure of injection gas so that spray of water 11 is generated in space within the storage bath 8. The spray of water 11 is reflected by a receiving plate 12 of the storage bath 8 and convects within the storage bath.

This receiving plate 12 is disposed to cover a substantially entire range of the top face of the storage bath 8 and a slight gap 13 is formed at an end portion thereof.

Hot gas (hot wind) and volatile gas generated by heating of flux make contact with fog-like water droplets and are cooled and after that, are discharged through the gap 13 at the end of the receiving plate 12.

Floats 14, 15 are disposed on both sides of the injection port 10 and floated on the surface of cooling liquid. When the water level drops, the injection port 10 descends with a decrease of water level so as to always keep a distance between the injection port 10 and the water surface constant.

According to this embodiment, a water level sensor 16 is disposed to detect a decrease of the water level due to evaporation and if the water level is below a predetermined water level, it is sensed by a sensor 16 and a water supply valve is opened to replenish water from a tank 18 or water supply pipe. Second embodiment

Next, the second embodiment represents the specific structure of the present invention.

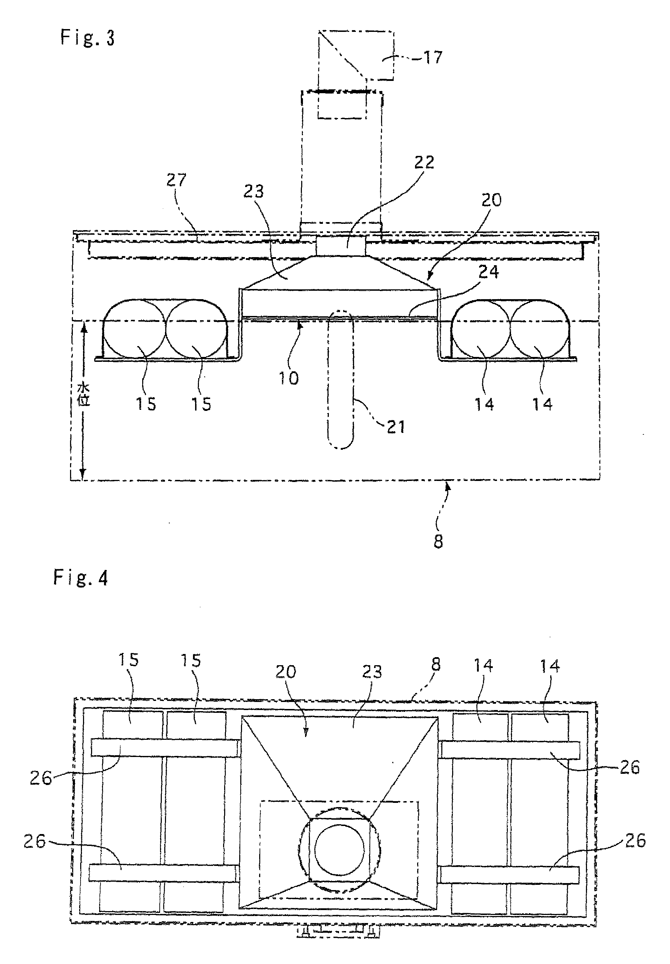

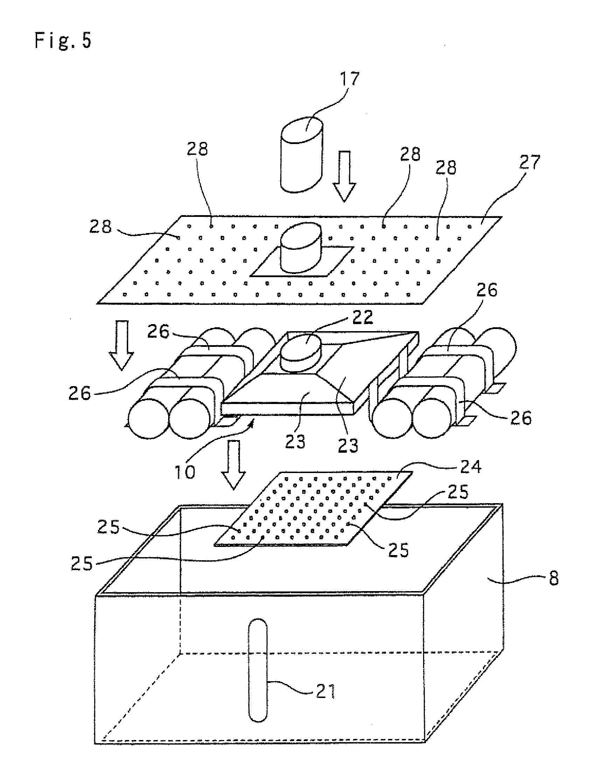

As shown in FIGS. 3 to 6, the emission gas cooling, cleaning apparatus of the second embodiment comprises exhaust air ducts 17 provided at the intake and outlet of the reflow furnace 1, a blower 9 for injecting hot gas (hot wind) and volatile gas generated by heating of flux sucked from the exhaust air duct 17, an injecting portion 20 for injecting hot gas (hot wind) and volatile gas generated by heating of flux sent from the blower 9, right and left floats 14, 15 for holding the injecting portion 20 in a condition of being floated on the cooling liquid and the storage bath 8 for storing cooling liquid.

The storage bath 8 is a box-like member which has a bottom face and side faces and constituted of corrosion resistant metals such as aluminum, stainless or the like and includes a check window 21 for checking the water level of cooling liquid on a side face. The top face of the storage bath 8 is open and the injecting portion 20 is inserted through this open portion. Although the quantity, shape and size of the storage baths 8 are not restricted, according to this embodiment, two storage baths are provided in each reflow furnace (see FIG. 6).

This is constituted of a storage bath 8 which sucks and cools hot gas (hot wind) and volatile gas generated by heating of flux from the intake 6 of the conveyor and a storage bath 8 which sucks and cools hot gas (hot wind) and volatile gas generated by heating of flux from the outlet 7 of the conveyor. The injecting portion 20 is a nozzle for injecting hot gas (hot wind) and volatile gas generated by heating of flux and is connected to the duct 17 inserted from the top of the storage bath 8 in order to inject hot gas (hot wind) and volatile gas generated by heating of flux sent from the duct 17 perpendicularly to the cooling liquid surface. A connection port 22 of the exhaust air duct 17 extending from the reflow furnace 1 is formed in the center above the injecting portion 20 and a horn-like expanded portion 23 is expanded downward in square shape from this connection port 22 and a scattering plate 24 is disposed at an outlet (injection port 10). This scattering plate 24 scatters hot gas (hot wind) and volatile gas generated by heating of flux over the liquid surface and has a plurality of small holes 25. Hot gas (hot wind) and volatile gas generated by heating of flux collide with this scattering plate so that the collision velocity to the liquid surface is accelerated when they pass the small holes 25.

The injection portion 20 has the floats 14, 15 on the right and left sides and these floats 14, 15 have buoyancy for floating the injection portion 20 in the center so that the injection portion 20 is floated on the cooling liquid surface by the floats.

The injection portion 20 is located in the center surrounded by the float and float so that it is floated on the water surface with the right and left sides held. Arms 26 are stretched to the right and left of the injection portion 20 and the floats are fixed to these arms 26 so that according to this embodiment, two floats are provided on each of the right and left side, totaling four resin containers. The floats 14, 15 are composed of a hollow resin container and these resin containers are floated on the liquid surface to hold the injection port 10 near the water surface. The distance between the water surface and the injection port 10 is set appropriately depending on the processing capacity of the apparatus and according to this embodiment, the distance between the water surface and the injection port is 1 to 2 cm. The injection portion 20 and the floats 14, 15 are constructed integrally while their lateral and longitudinal sides are accommodated inside the storage bath 8 and are lifted up/down depending on the water level within the storage bath.

Because the injection port 10 is floated with the floats, the distance between the injection port 10 and the liquid surface is always kept constant even if the cooling liquid decreases accompanied by an operation of the apparatus.

A receiving plate 27 for receiving the spray of water when the apparatus is actuated is disposed in the opening at the top portion of the storage bath. Small holes 28 are formed in the entire receiving plate 27 to permit only cooled gas to pass through preventing the fog-like cooling liquid from being discharged outside.

The receiving plate 27 may be provided with a passage gap at the end thereof like the receiving plate 12 of the first embodiment or may be constructed to allow only gas to pass with sponge-like member disposed.

The operation of this embodiment will be described.

In the reflow furnace 1, the printed board 5 coated with solder paste and on which an electronic component is mounted is placed on the conveyor within the reflow furnace and carried within its heating furnace. In the heating furnace, several stages are set up and in each furnace, hot gas (hot wind) is spouted to the printed board and the spouted hot gas (hot wind) is recycled.

However, because the gaps at the intake and outlet of the conveyor communicate directly with outside, hot gas (hot wind) and volatile gas generated by heating of flux leak through these portions.

According to the present invention, the exhaust air duct 17 is disposed above the intake 6 and the outlet 7 of the reflow furnace 1. In this exhaust air duct 17, hot gas (hot wind) and volatile gas generated by heating of flux at the intake and outlet of the conveyer are collected and the sucked hot gas (hot wind) and volatile gas generated by heating of flux are injected from the injection port 10 by the blower 9 with a pressure. The hot gas (hot wind) and volatile gas by heating of flux, injected from the injection port 10 are scattered by the expanded portion 23 and the scattering plate 24 and injected onto the opposing cooling liquid surface so that they are cooled. At this time, spray of water is generated by the injection pressure of the hot gas (hot wind) and volatile gas generated by heating of flux, so that the hot gas (hot wind) and volatile gas generated by heating of flux make contact with this fog-like water droplets and are cooled effectively. Further, such as the volatile gas generated by heating of flux is absorbed by cooling liquid so as to exert cleaning effect.

The cooling liquid decreases as it evaporates gradually and the connection port 22 slides or extends as the water level drops, so that the injection port 10 drops, thereby keeping the distance between the injection port 10 and the liquid surface always constant. Gas after cooling is discharged out of the reflow furnace and thus, the working environment is not affected even indoor by the cooling operation.

The present invention is capable of adjusting the cooling effect by controlling the injection pressure of the blower.

The embodiments of the present invention have been described above and the specific structures of the invention are not restricted to the above-mentioned embodiments but changes in design within the range not departing from the spirit of the invention are included in the present invention. For example, the reflow furnace has been described in the embodiments above and the present invention includes cases where other heating furnace is used.

Although the above embodiments adopt a structure of injecting hot gas (hot wind) and volatile gas generated by heating of flux against the scattering plate 24, it is permissible to change the injection angle to the liquid surface by changing the shape of the nozzle of the injection port.

In a loading line using the furnace, the reflow furnace, construction of the exhaust air duct for installation of new equipment, change of the layout of existing equipment or moving to other workshop is not necessary thereby making it possible to suppress construction cost.

## Claims

1. An apparatus for cooling and cleaning emission gas comprising:
an exhaust air duct for discharging hot gas (hot wind) and volatile gas generated by heating of flux;
storage baths for storing cooling liquid; and
a blower for injecting emission gas including hot gas (hot wind) and volatile gas generated by heating of flux sent from the exhaust air duct against the surface of the cooling liquid with a pressure.

2. An apparatus for cooling and cleaning emission gas comprising:
an exhaust air duct for hot gas (hot wind) and volatile gas generated by heating of flux disposed at an intake and an outlet of a heating portion of a reflow furnace;
storage baths for storing cooling liquid; and
a blower for injecting emission gas including hot gas (hot wind) and volatile gas generated by heating of flux sent from the exhaust air duct against the surface of the cooling liquid with pressure.

3. The apparatus for cooling and cleaning emission gas according to claim 1 or 2, wherein an injection port for hot gas (hot wind) and volatile gas generated by heating of flux sent from the exhaust air duct is disposed in the vicinity of the surface of cooling liquid; the injection port is disposed in a condition of being floated on the liquid surface with floats; and the injection port on the floats is lifted up/down corresponding to changes of the level of the cooling liquid so that the distance between the liquid surface and the injection port is kept constant.

4. The apparatus for cooling and cleaning emission gas according to any one of claims 1 to 3, wherein the emission gas from the injection port is injected to collide with a scattering plate so that it is scattered.

5. The apparatus for cooling and cleaning emission gas according to any one of claims 1 to 4, wherein emission gas including hot gas (hot wind) and volatile gas generated by heating of flux sent from the injection port is made to collide with the liquid surface so as to generate spray of water so that fog-like water droplets make contact with the hot gas to secure cooling efficiency.
